# EUROPEAN PATENT APPLICATION

(11) **EP 3 025 576 A1**
(43) Date of publication of application: **01.06.2016**
(21) Application number: 15196297.4
(22) Date of filing: 25.11.2015
(51) Int. Cl.: A01D 43/063

(54) **MOWER**

(30) Priority: 28.11.2014 JP 2014241132; 16.10.2015 JP 2015204981
(71) Applicant: Iseki & Co., Ltd., Matsuyama-shi, Ehime 799-2692 (JP)
(72) Inventor: KURITA, Kazuyuki, Iyo-gun, Ehime 791-2193 (JP); ENOMOTO, Wakao, Iyo-gun, Ehime 791-2193 (JP)
(74) Representative: Spengler, Robert

(57) **Abstract**

A mower includes a vehicle body frame (2); a mower unit (6); a collector (14); a guide part (26, 100, 150, 211, 221) which guides the mowed lawn or grass from the mower unit (6) to the collector (14); and a collector lifting mechanism (19, 28, 29) which switches the collector (14) between a discharging position and a housing position, characterized in that the guide part (26, 100, 150, 211, 221) has a joining part (100, 211, 221) which can be joined to the collector (14), and the joining part (100, 211, 221) is located at a first position at which the joining part is joined to the collector (14) when the collector (14) is located at the housing position, and is located at a second position at which the joining part is located away from the collector (14) when the collector (14) is located at the discharging position.

## Description

### BACKGROUND OF THE INVENTION

### Field of the Invention

The present invention relates to a mower for carrying out mowing operation of mowing lawn or grass.

### Related Art of the Invention

Regarding the conventional mower (see, for example, Japanese Patent No. 4967304), when the mowing operation is carried out, the mowed lawn or grass is conveyed into the collector through the lower duct which is fixed to the blower case and the upper duct which is fixed to the collector. Additionally, when the mowed lawn or grass which is housed in the collector is discharged, the upper duct and the lower duct which are in a joining state are separated by lifting the collector.

### SUMMARY OF THE INVENTION

### Problems to be Solved by the Invention

In a case of the conventional mower which is disclosed by the document of Japanese Patent No. 4967304, the upper duct and the lower duct which are in the joining state are separated, and the mowed lawn or grass is discharged by lifting the collector.

Thereafter, in a case of the conventional mower, when the collector and the upper duct are lowered, the joining surface of the upper duct is lowered while being moved forward and comes into surface-contact with the lower duct via a rubber-made seal member which is disposed on the lower duct. Therefore, in a case of the conventional mower, a larger friction resistance is generated on the contact surfaces between the upper duct and the lower duct, and the problem of the conventional mower is that the positional slippage of their contact surfaces exceeding the previously set range easily occurs.

In view of the above-mentioned problem of the conventional mower, an object of the present invention is to provide a mower which is capable of realizing a favorable joining state between a collector and a guide part which guides the mowed lawn or grass to the collector.

### Means for Solving the Problems

The 1^{st} aspect of the present invention is a mower comprising:
a vehicle body (2);
a mower unit (6) which is connected to the vehicle body (2);
a housing part (14) which houses mowed lawn or grass which is mowed by the mower unit (6);
a guide part (26, 100, 150, 211, 221) which guides the mowed lawn or grass from the mower unit (6) to the housing part (14); and
a lifting apparatus (19, 28, 29) which switches the housing part (14) between a discharging position to discharge the mowed lawn or grass from the housing part (14) and a housing position to house the mowed lawn or grass into the housing part (14),
characterized in that
the guide part (26, 100, 150, 211, 221) has a joining part (100, 211, 221) which can be joined to the housing part (14), and
the joining part (100, 211, 221) is located at a first position at which the joining part is joined to the housing part (14) when the housing part (14) is located at the housing position, and is located at a second position at which the joining part is located away from the housing part (14) when the housing part (14) is located at the discharging position.

By means of this, mower of the present invention is capable of realizing a favorable joining state between a collector and a guide part which guides the mowed lawn or grass to the collector.

The 2^{nd} aspect of the present invention is the mower according to the 1^{st} aspect of the present invention, wherein
the joining part (100, 211, 221) has a first inclination at the first position and a second inclination at the second position, the second inclination being larger than the first inclination.

By means of this, when the housing part is lowered from the discharging position, the joining part is located at the second position at which the joining part has a second inclination that is larger than a first inclination at the thirst position. Therefore, exerted is an effect such that the friction resistance which is generated between the joining part and the housing part can be reduced, and positional slippage between the joining part and the housing part hardly occurs.

The 3^{nd} aspect of the present invention is the mower according to the 1^{st} or the 2^{nd} aspect of the present invention, comprising
a detection part (140) which detects whether the housing part (14) is located at the housing position or not, and is disposed on a main body (26) of the guide part, and
a detection arm (141) which is arranged on the joining part (100),
wherein the detection part (140) detects that the housing part (14) is located at the housing position by abutting of the detection arm (141) on the detection part (140).

By means of this, the detection part is capable of surely detecting whether the housing part is located at the housing position or not.

The 4^{th} aspect of the present invention is the mower according to any one of the 1^{st} to the 3^{rd} aspect of the present invention,

wherein the joining part (100, 211, 221) is turnably mounted on the main body (26) of the guide part.

By means of this, the joining part can be turned surely by a simple configuration.

The 5^{th} aspect of the present invention is the mower according to the 4^{th} aspect of the present invention, comprising
a turning arm (110, 222) which is turnably mounted on the main body (26) of the guide part, wherein
the joining part (100, 221) is turnably attached to an end part of the turning arm (110, 222).

By means of this, since the joining part can be turned or moved around two fulcrum shafts, the further favorable joining state between the collector and the guide part which guides the mowed lawn or grass to the collector can be realized.

The 6^{th} aspect of the present invention is the mower according to the 5^{th} aspect of the present invention, wherein
the joining part (100, 211, 221) is joined to the main body (26) of the guide part at the first position, and is located away from the main body (26) of the guide part at the second position.

By means of this, the further favorable joining state between the collector and the guide part which guides the mowed lawn or grass to the collector can be realized.

### Advantageous Effects of the Invention

According to the present invention, it can be achieved to provide a mower which is capable of realizing a favorable joining state between a collector and a guide part which guides the mowed lawn or grass to the collector.

### BRIEF DESCRIPTION OF THE DRAWINGS

FIG. 1 is a left side view of a riding-type mower according to the first embodiment of the present invention;
FIG. 2 is a plan view of a power transmission mechanism of the riding-type mower according to the first embodiment of the present invention;
FIG. 3 is an explanation view which shows a state where a collector is lifted, with respect to the riding-type mower according to the first embodiment of the present invention;
FIG. 4 is an explanation view which shows a state where the collector is turned about a turning shaft, with respect to the riding-type mower according to the first embodiment of the present invention;
FIG. 5 is a perspective view which shows a state where a bottom side of the collector of the first embodiment is viewed from a left front lower side thereof;
FIG. 6 is a schematic perspective view which shows a state where an inside of the collector of the first embodiment is viewed from a left rear upper side thereof;
FIG. 7 is a schematic sectional view of a main part of a front part of the collector of the first embodiment;
FIG. 8 is a schematic left side view for explaining configuration of an upper end part of a duct of the first embodiment;
FIG. 9 is a perspective view an upper end part of the duct shown in FIG. 8;
FIG. 10 is a perspective view of a joining part main body shown in FIG. 8;
FIG. 11 is a schematic view which shows a state where a joining state, in which a first joining part of the duct side and a collector flange part are joined together, is viewed along an arrow Q direction (see FIG. 8) when the collector of the first embodiment is in a housing posture;
FIG. 12 (a) is a schematic side view which shows a joining position at which the first joining part is located when the collector of the first embodiment is in a housing posture where the collector is joined with the first joining part;
FIG. 12 (b) is a schematic side view which shows a separating position at which the first joining part is located when the collector of the first embodiment is located away from the first joining part;
FIG. 13 (a) is a partial enlarged left side view which shows positional relation between the first joining part and the collector flange part when the collector of the first embodiment is slightly lifted from the housing position;
FIG. 13 (b) is a partial enlarged left side view which shows positional relation between the first joining part and the collector flange part when the collector of the first embodiment is further lifted from the housing position to be separated from the first joining part;
FIG. 14 (a) is a partial enlarged left side view which shows positional relation between the first joining part and the collector flange part when the collector of the first embodiment is lowered from the discharging position to come into contact with a front end part of the first joining part;
FIG. 14 (b) is a partial enlarged left side view which shows positional relation between the first joining part and the collector flange part when the collector of the first embodiment is further lowered to come into surface-contact with a packing member of the first joining part;
FIG. 15 (a) is a left side view of an assembly part in which the duct of the first embodiment is fixed to a blower case by bolts;
FIG. 15 (b) is a perspective view of the assembly part shown in FIG. 15 (a);
FIG. 16 is a schematic left side view for explaining configuration of a first joining part as another example which is arranged on a upper end part of the duct of the first embodiment;
FIG. 17 is a schematic side view for explaining a main part of a joining portion between a duct and a joining port according to a second embodiment of the present invention; and
FIG. 18 is a schematic side view for explaining a main part of another example of a joining portion between a duct and a joining port according to a second embodiment of the present invention.

### Description of Symbols

- 1: riding-type mower
- 2: vehicle body frame
- 3: front wheel
- 4: rear wheel
- 5: mowing blade
- 5a: rotation shaft
- 6: mower unit
- 14: collector
- 19: collector lifting mechanism
- 23: blower
- 24: blower case
- 26: duct
- 26a: upper end surface of duct
- 27: transfer shooter
- 28: lifting cylinder
- 29: turning cylinder
- 100: first joining part
- 101c: second turning shaft
- 102: packing member
- 102a: surface of packing member
- 110: turning arm
- 110a: first turning shaft
- 120: first tension spring
- 130: second tension spring
- 140: detection sensor
- 141: detection rod
- 211: second joining part
- 221: third joining part

### PREFERRED EMBODIMENTS OF THE INVENTION

Hereinafter, embodiments of mower according to the present invention will be described with reference to drawings.

### (First Embodiment)

In this embodiment, a configuration and operation with respect to a riding-type mower 1 as one example of the mower of according to the present invention will be described with reference to drawings.

By the way, in the present specification, the left and right directions in the state, where the driver rides on the riding-type mower and faces toward the forward movement direction of the riding-type mower, are said to be the left (or the left direction) and the right (or the right direction) respectively, the forward movement direction is said to be the front (or the front direction), and the backward movement direction is said to be the rear (or the rear direction).

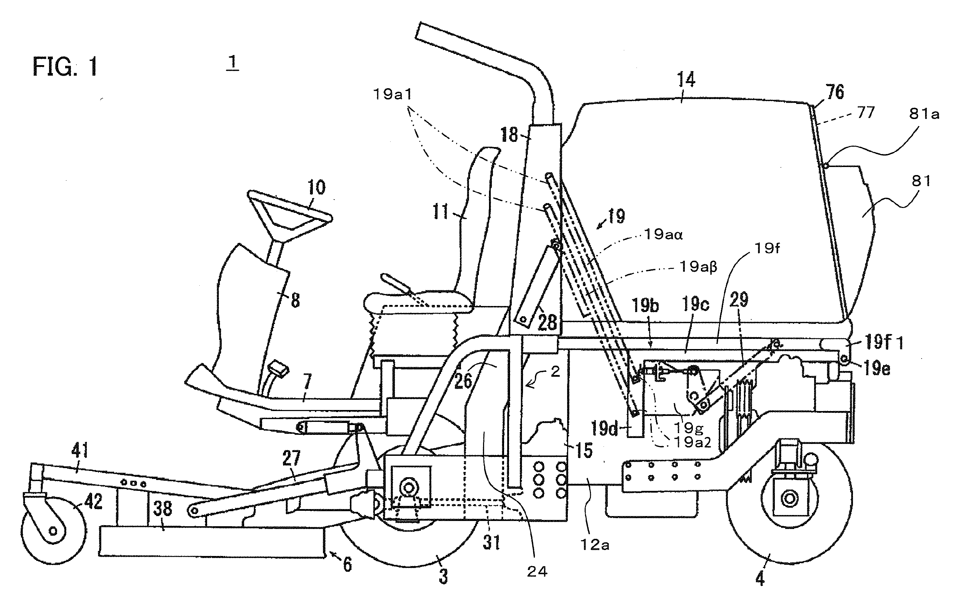

FIG. 1 is a left side view of the riding-type mower 1 of the first embodiment, and

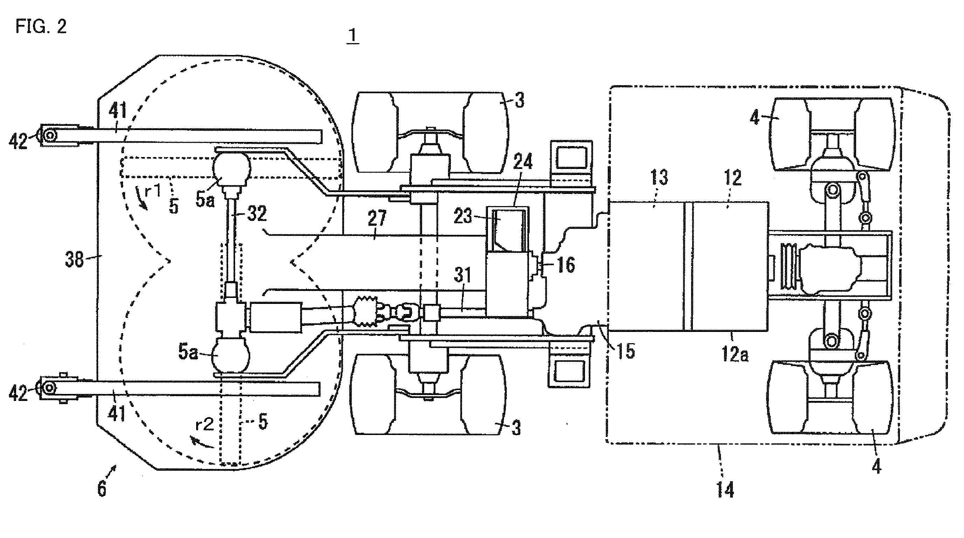

FIG. 2 is a plan view of a power transmission mechanism of the riding-type mower 1 of the first embodiment.

As shown in FIGs. 1 and 2, the riding-type mower 1 of the present embodiment is provided with a pair of left and right front wheels 3 and 3 which are disposed on the front part of a vehicle body frame 2, a pair of left and right rear wheels 4 and 4 which are disposed on the rear part of a vehicle body frame 2, and mower unit 6 which is disposed below the front part of the vehicle body frame 2 and includes a pair of left and right mowing blades 5 and 5.

Additionally, a steering column 8 is vertically arranged on a floor 7 which is arranged above the front part of the vehicle body frame 2, a steering wheel 10 is disposed on the upper part of the steering column 8. Moreover, a driver's seat 11 is disposed in the rear side of the steering wheel 10, a radiator 13 for cooling down an engine 12 is disposed in the rear side of the driver's seat 11, and the engine 12 is disposed behind the radiator 13.

Additionally, the engine 12 and the radiator 13 are housed in a hood 12a.

A collector 14, which houses the lawn or grass mowed by the mower unit 6, is arranged above the hood 12a. By the way, in the present specification, the lawn or grass mowed by the mower unit 6 is said to be the mowed lawn or grass.

An output from the engine 12 is input to a transmission (not shown) in a transmission case 15 which is arranged forward of the engine 12. The rotation driving force of the engine 12 is shifted by the transmission, and then the shifted driving force is transmitted to the pair of left and right front wheels 3 and 3 and the pair of left and right rear wheels 4 and 4.

Further, a transmitting shaft 16 (see FIG. 2) extends forwardly from the upper side of the transmission case 15, a blower 23 (see FIG. 2) is driven by the driving force from the transmitting shaft 16. The blower 23 is a device which generates carrying air flow for carrying the mowed lawn or grass which is mowed by the mower unit 6 to the collector 14 side. The blower 23 is housed in a blower case 24, and a duct 26 for carrying and guiding the mowed lawn or grass, which allows the blower case 24 to communicate with the collector 14, is disposed on the upper side of the blower case 24. Additionally, a transfer shooter 27 is arranged between the blower 23 and the mower unit 6. The mowed lawn or grass which is mowed by the mower unit 6 is passed through the transfer shooter 27, the blower case 24, and the duct 26, and carried to the rear collector 14. By the way, a first joining part 100 which is disposed on the duct 26 and its related members will be described later with reference to drawings.

Additionally, an exhaust port 77 (see FIG. 1) is disposed on the rear end wall 76 of the collector 14, and is capable of exhausting the air (the carrying air flow) which is transmitted into the collector 14 to the outside. Incidentally, a mesh-like member (not shown) is attached onto the inner side of the exhaust port 77 so as to prevent the mowed lawn or grass in the collector 14 from leaking out of the collector 14.

Additionally, the collector 14 is provided with a door 81 (see FIG. 1), which is used for discharging the mowed lawn or grass, below the exhaust port 77. The door 81 is openably and closably supported to the main body of the collector 14 by a hinge 81a.

Furthermore, the rotation driving force of the engine 12 is transmitted to the rotation shafts 5a and 5a of the mowing blades 5 and 5 via a mower unit driving shaft 31 which extends forwardly from the transmission case 15 and a mower unit transmission shaft 32 which extends in a left-right direction (that is, a lateral direction) from the front end of the mower unit driving shaft 31. In the present embodiment, the pair of left and right mowing blades 5 and 5 are rotated in mutually opposite directions (see arrows r1 and r2 of FIG. 2).

By means of this, the lawn or grass which enters a mower deck 38 is mowed by the pair of left and right mowing blades 5 and 5, and the mowed lawn or grass which is mowed by the left mowing blade 5 and the mowed lawn or grass which is mowed by the right mowing blade 5 meet each other as mowed lawn or grass at a central portion in the left-right direction of the mower deck 38. This mowed lawn or grass, as described above, is passed through the transfer shooter 27, the blower case 24, and the duct 26, and is collected by the collector 14 which is arranged on the rear part of the vehicle body frame 2.

A base end of an auxiliary wheel arm 41 which extends forwardly is supported on the upper part of the mower deck 38, and an auxiliary wheel 42 is rotatably supported to the front end of the auxiliary wheel arm 41.

Additionally, a pair of right and left support columns 18 and 18 is vertically arranged behind the driver's seat 11. A pair of right and left collector lifting mechanisms 19 and 19 is supported by the pair of right and left support columns 18 and 18. The pair of right and left support columns 18 and 18 has a pair of upper and lower collector lifting arms 19aα and 19aβ and a pair of left and right lifting cylinder 28 and 28. The base ends 19a1 and 19a1 of the pair of upper and lower collector lifting arms 19aα and 19aβ are turnably supported to each upper end side of the pair of right and left support columns 18 and 18. The tip ends 19a2 and 19a2 of the pair of upper and lower collector lifting arms 19aα and 19aβ are turnably connected to a lifting pedestal 19b which is arranged under the collector 14.

Additionally, the base end 19a1 side of the lower collector lifting arm 19aβ and a lower end side of the support column 18 are connected by an extensible lifting cylinder 28. The extensible lifting cylinder 28 is disposed on each of the left and right support columns 18 and 18.

Additionally, the lifting pedestal 19b has a horizontal part 19c extending in a front-rear direction (that is, a longitudinal direction) along a bottom part of the collector 14, a vertical part 19d extending downward from the front end of the horizontal part 19c, and a connection body 19g which mutually connects the horizontal part 19c and the vertical part 19d to reinforce them. The pair of left and right horizontal parts 19c and 19c are connected by connecting bar (not shown) extending in a left-right direction (that is, a lateral direction) at each rear end of the pair of left and right horizontal parts 19c and 19c. The tip ends 19a2 and 19a2 of the pair of upper and lower collector lifting arms 19aα and 19aβ are turnably connected to vertical part 19d.

Additionally, a turning arm 19f is turnably arranged above the horizontal part 19c. That is, a base end 19f1 of the turning arm 19f is supported so as to be capable of turning about a turning shaft 19e which is disposed at the rear end part of the horizontal part 19c. The base end 19f1 side of the turning arm 19f and the connection body 19g are connected by an extensible turning cylinder 29. The extensible turning cylinder 29 is disposed on each of the left and right connection bodies 19g and 19g. The pair of left and right turning arms 19f and 19f are fixed to the bottom part of the collector 14.

By the way, the vehicle body frame 2 of the present embodiment is one example of a vehicle body of the present invention, the mower unit 6 of the present embodiment is one example of a mower unit of the present invention. The collector 14 of the present embodiment is one example of a housing part of the present invention, the duct 26 of the present embodiment is one example of a main body of a guide part of the present invention. A configuration which includes the pair of left and right collector lifting mechanisms 19 and 19, the pair of left and right lifting cylinders 28 and 28, and the pair of left and right turning cylinders 29 and 29 is one example of a lifting apparatus of the present invention.

Next, each movement of the collector 14 and the collector lifting mechanisms 19 and 19 will be described with reference to Figs. 1, 3, and 4.

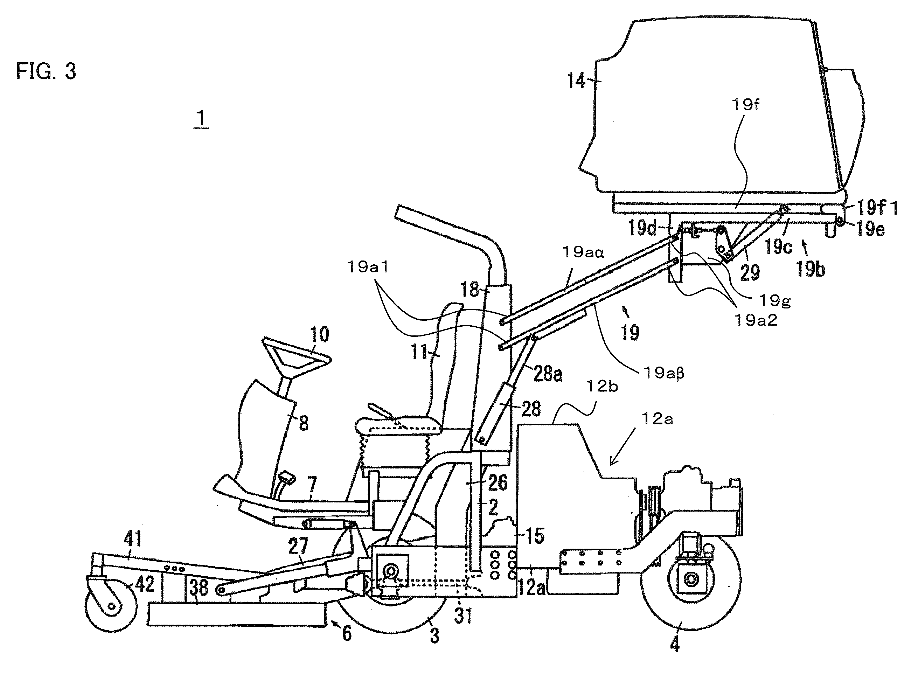

Next, FIG. 3 is an explanation view which shows a state where a collector 14 of the riding-type mower 1 according to the present embodiment is lifted.

By the way, in this specification, since the pair of left and right collector lifting mechanisms 19 and 19 carry out the mutually same movement, the explanation of the movement of the left collector lifting mechanism 19 will be described, and the explanation of the movement of the right collector lifting mechanism 19 will be omitted. Moreover, in this specification, since the pair of left and right lifting cylinders 28 and 28 carry out the mutually same movement, the explanation of the movement of the left lifting cylinder 28 will be described, and the explanation of the movement of the right lifting cylinder 28 will be omitted. Regarding the other pair of left and right members, the explanation of the movement of the left side member will be described and the explanation of the movement of the right side member will be omitted.

As shown in FIGs. 1 and 3, in the case of the collector lifting mechanism 19 of the present embodiment, when the lifting cylinder 28 operates and the rod 28a thereof extends, the paired collector lifting arms 19aα and 19aβ is turned in a counterclockwise direction in a left side view, and as a result, the lifting pedestal 19b is lifted. At this time, by means of the parallel link structure of the pair of upper and lower collector lifting arms 19aα and 19aβ, the lifting pedestal 19b and the collector 14 are lifted while holding each horizontal state thereof, and are moved to a lift position as shown in FIG. 3.

Incidentally, in a case where the collector 14 is located at the lift position shown in FIG. 3, when the lifting cylinder 28 operates and the rod 28a retracts, the paired collector lifting arms 19aα and 19aβ is turned in a clockwise direction in a left side view, and as a result, the collector 14 is lowered and returned to a housing position shown in FIG. 1.

In this specification, the posture of the collector 14 which is located at the housing position (see FIG. 1) is referred to as a housing posture of the collector 14.

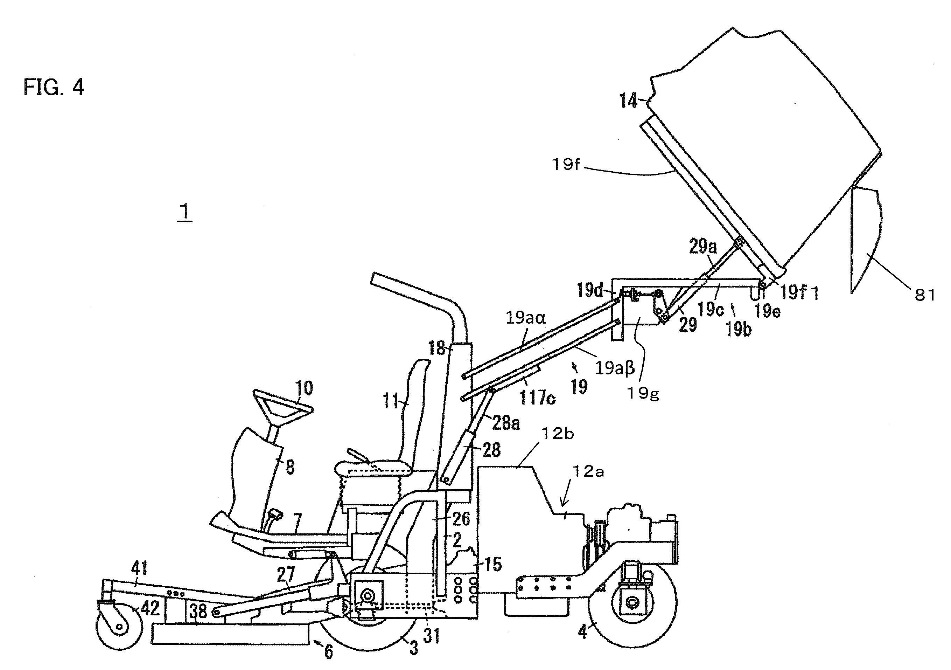

FIG. 4 is an explanation view which shows a state where the collector 14 of the riding-type mower 1 according to the present embodiment is turned about the turning shaft 19e.

As shown in FIGs. 3 and 4, when the turning cylinder 29 operates and the rod 29a thereof extends, turning arm 19f is turned in a clockwise direction in a left side view about the turning shaft 19e. Accordingly, the collector 14 which is fixed to the turning arm 19f is also turned. As a result, the collector 14 is moved to a discharging position (dumping position) where the mowed lawn or grass which is housed in the collector 14 can be discharged to the outside.

Incidentally, when the turning cylinder 29 operates and the rod 29a thereof retracts, the collector 14 is returned to the lifting position shown in FIG. 3.

In this specification, the posture of the collector 14 which is located at the discharging position (see FIG. 4) is referred to as a discharging posture of the collector 14.

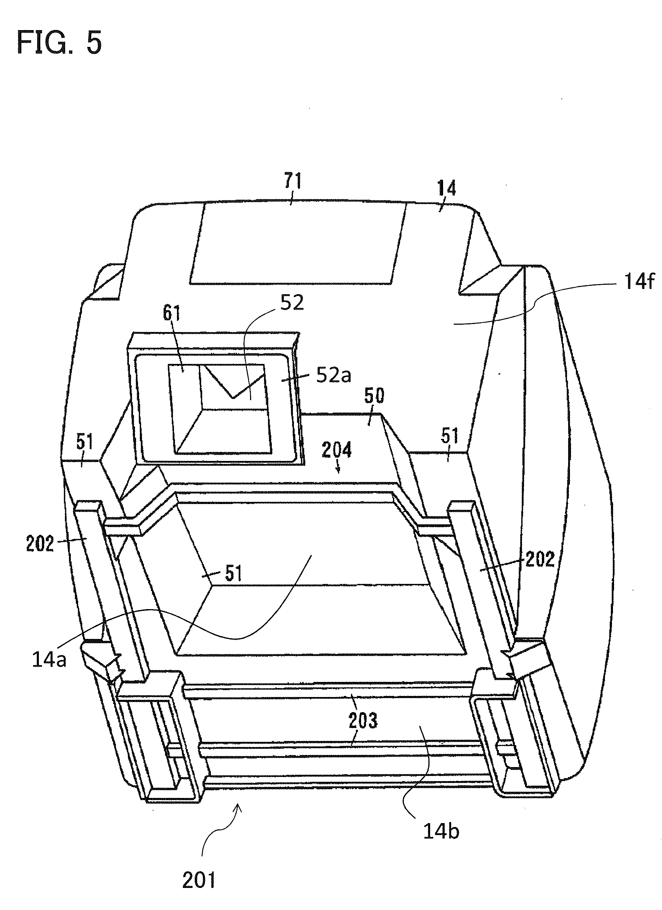

Next, configuration of the collector 14 will be further described with reference to Figs. 5 to 7 mainly.

FIG. 5 is a perspective view which shows a state where a bottom side of the collector 14 of the present embodiment is viewed from a left front lower side thereof.

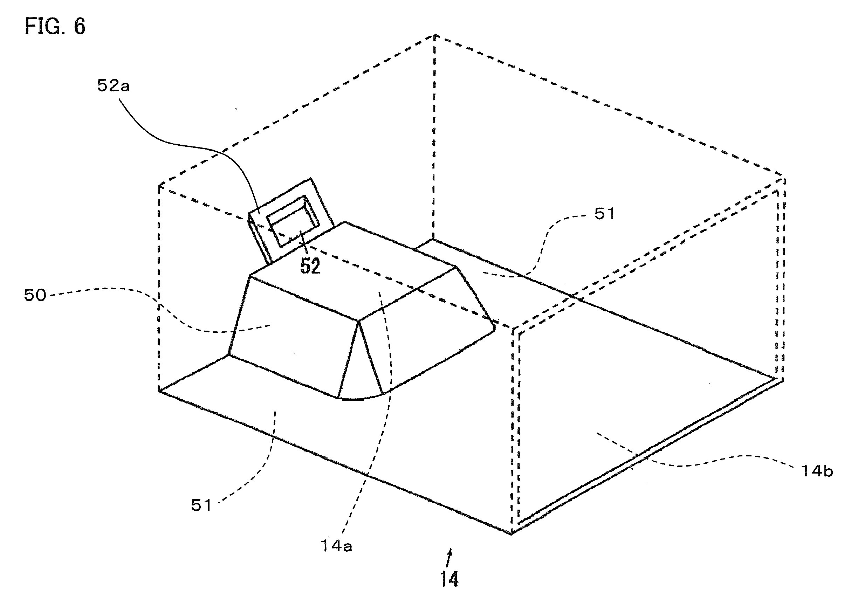

FIG. 6 is a schematic perspective view which shows a state where an inside of the collector 14 of the present embodiment is viewed from a left rear upper side thereof.

As shown in FIGs. 5 and 6, the bottom surface of the collector 14 is provided with a recessed part 50 which is recessed upward and corresponds to a projection part 12b of the hood 12a (see FIG. 3). A previously set constant clearance is kept between the bottom surface (see 14a and 14b of FIG. 5) of the collector 14 and the upper surface of the hood 12a.

The recessed part 50 extends to the front end of the collector 14. The recessed part 50 is formed in the center part in a left-right direction (that is, a lateral direction) of the collector 14. Therefore, both side collecting parts 51 and 51, which are located both sides in the collector 14 in the left-right direction, protrude downward with reference to the bottom surface 14a of the recessed part 50. Accordingly, the collector 14 has the front end part 14f formed in gantry shape which encircles the upper side and both right and left sides of hood 12a for covering the engine 12 in a front side view.

By means of this, since the volume of the recessed part 50 is suppressed to the minimum, it is possible to secure a large housing capacity for the mowed lawn or grass with respect to the collector 14.

Regarding the bottom surface of the collector 14, the rear bottom surface 14b (see FIG. 5) is lower as compared to the surface 14a (see FIG. 5) of the recessed part 50 which is disposed on the front bottom part of the collector 14, with reference to the direction of gravity.

By means of this, in a case where the collector 14 is allowed to be turned to discharge the mowed lawn or grass which is housed in the collector 14, the mowed lawn or grass can be prevented from remaining in the front part of the collector 14.

Additionally, as shown in FIG. 5, the bottom part of the collector 14 is provided with a reinforcing frame 201 as a reinforcing member. The reinforcing frame 201 has a pair of left and right longitudinal direction frames 202 and 202 which are located on both left and right sides of the bottom part of the collector 14, first lateral direction frames 203 and 203 which are located on rear part sides of the paired longitudinal direction frames 202 and 202, and a second lateral direction frame 204 which is located on front part sides of the paired longitudinal direction frames 202 and 202.

Additionally, regarding the reinforcing frame 201, each of the longitudinal direction frames 202 and 202 is supported at the position where corresponds to the position between the first lateral direction frames 203 and 203, by the turning arm 19f. That is, two first lateral direction frames 203 and 203 are located on the position corresponding to the position at which the load from the base end 19f1 of the turning arm 19f is received and the highest strength is required.

Additionally, regarding the reinforcing frame 201, by the second lateral direction frame 204 which is located along the surface of the recessed part 50, the collector 14 can be prevented from interfering with hood 12a and the strength of the front part of the collector 14 can be reinforced.

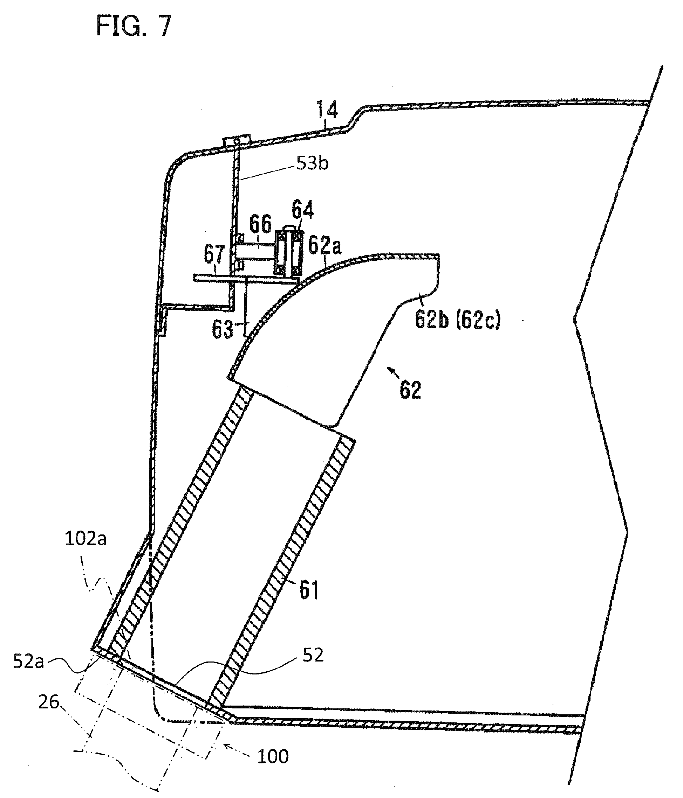

FIG. 7 is a schematic sectional view of a main part of the front part of the collector 14.

As shown in FIGs. 6 and 7, a joining port 52 which is capable of being connected with the duct 26 and has a quadrilateral shape is formed on the position slightly to the right of outside wall of the front end of the collector 14. A collector flange part 52a which is disposed around the joining port 52 is inclined diagonally upwards from a rear side toward a front side in a side view in such a manner that the joining port 52 can be joined to a joining surface of a first joining part 100 mounted on the duct 26 without a gap when the collector 14 is in a housing state.

Incidentally, the joining surface of the first joining part 100, which is mounted on the duct 26, is separated from the collector flange part 52a by lifting the collector 14, and is joined to the collector flange part 52a by moving down the collector 14. This matter will be described with reference to drawings later in detail.

As shown in FIG. 7, in the inside of the collector 14, a lower end of a quadrilateral cylinder-shaped discharge cylinder 61 is fixed to the collector flange part 52a which is disposed around the joining port 52. The discharge cylinder 61 extends along the extending direction of the duct 26.

Additionally, a diffusion plate 62 is arranged over the discharge cylinder 61 so as to be swingable in left-right direction about the shaft part 64 which is fixed and supported to the wall part 53b. The diffusion plate 62 is connected to the shaft part 64 via a connecting plate 63.

A connecting arm 67 which protrudes from the front end of the connecting plate 63 to the front thereof is connected to a motor unit (not shown) in such a manner that the connecting plate 63 is capable of swinging in the left-right direction about the shaft part 64.

Additionally, the diffusion plate 62 has a main body plate 62a which is gradually bent rearward as it extends upward from the upper end of discharge cylinder 61, and side walls 62b and 62c which are formed on both left and right sides of the main body plate 62a.

By means of this, since the mowed lawn or grass which is carried into the inside of the collector 14 thought the discharge cylinder 61 is diffused in the left-right direction by the diffusion plate 62 which is capable of swinging in the left-right direction, the occurrence of a space where the mowed lawn or grass is not housed, that is, the occurrence of a dead space in the collector 14 is suppressed.

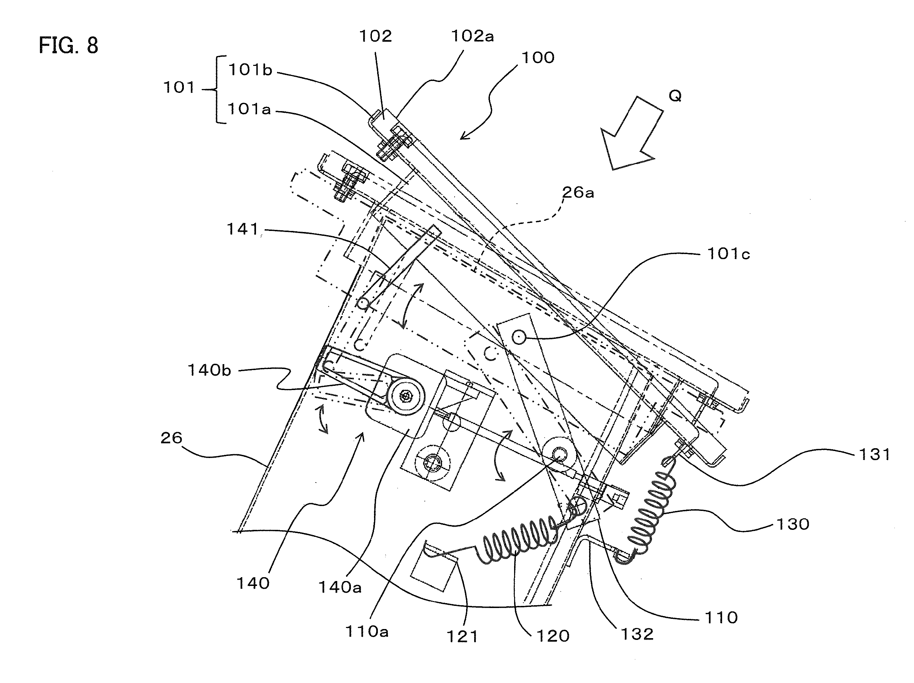

Next, the first joining part 100 as one example of a joining part of the present invention, which is disposed on the duct 26, and its related members will be described in detail with reference to Figs. 8 to 11.

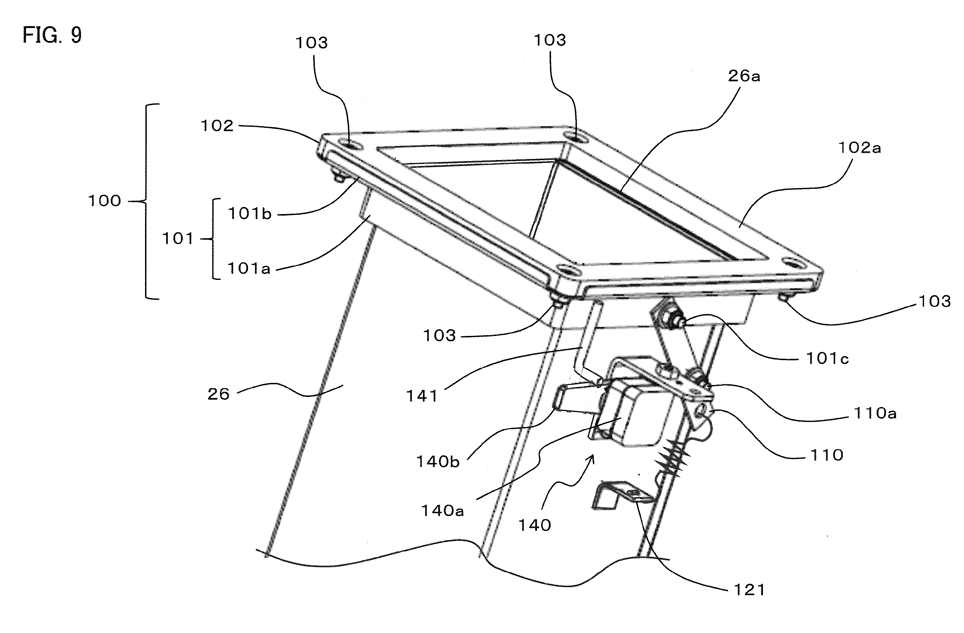

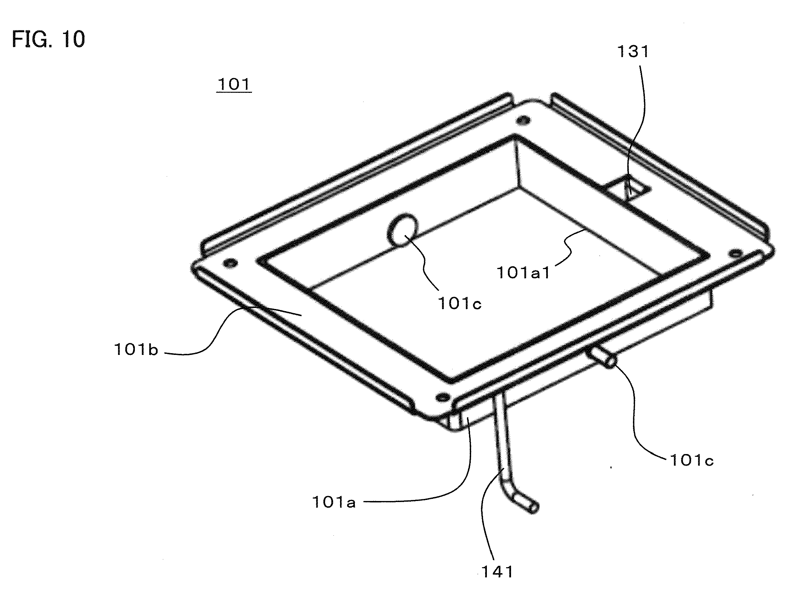

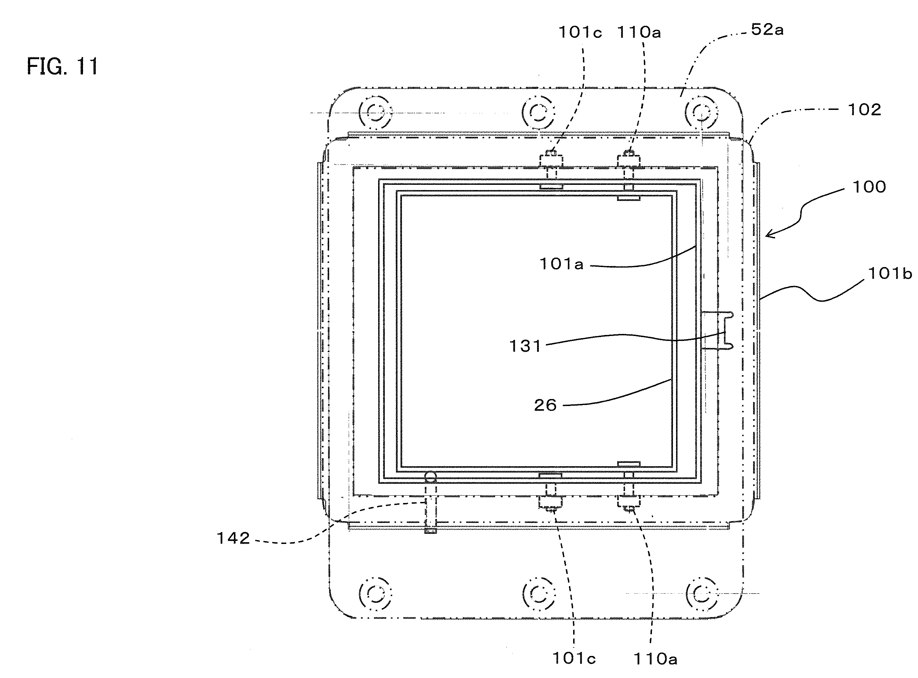

FIG. 8 is a schematic left side view for explaining configuration of an upper end part of the duct 26 of the present embodiment. FIG. 9 is a perspective view an upper end part of the duct 26 shown in FIG. 8. FIG. 10 is a perspective view of a main body 101 of the first joining part shown in FIG. 8. FIG. 11 is a schematic view which shows a state where a joining state, in which the first joining part 100 of the duct 26 side and the collector flange part 52a are joined together, is viewed along an arrow Q direction (see FIG. 8) when the collector 14 of the present embodiment is in a housing posture.

By the way, in FIG. 11, the duct 26 and the first joining part 100 (except a packing member 102) are shown with a solid line, and the collector flange part 52a and the packing member 102 of the first joining part 100 are shown with a two-dot chain line.

A pair of left and right turning arms 110 and 110 are disposed on the left and right rear sides of the upper end part of the duct 26 so as to be turnable about a pair of left and right first turning shafts 110a and 110a. Incidentally, the pair of left and right first turning shafts 110a and 110a are welded and fixed to the left and right rear sides of the upper end part of the duct 26.

Additionally, the first joining part 100 is supported by tip parts of the pair of left and right turning arms 110 and 110 so as to be turnable about a pair of left and right second turning shafts 101c and 101c.

The first joining part 100 has a joining part main body 101 and the packing member 102 which is made of rubber and is fixed to a flange part 101b of the joining part main body 101. The joining part main body 101 is, as shown in FIGs. 10 and 11, configured with a roughly quadrilateral cylinder-shaped frame body 101a which has the area of an opening part thereof, which is larger than the area of an external shape of the upper end part of the duct 26, and the roughly quadrilateral-shaped flange part 101b which is welded and fixed to the upper end of the frame body 101a. A detection rod 141 which will be described in later is welded and fixed to the left front side of the frame body 101 a. The pair of left and right second turning shafts 101c and 101c are welded and fixed to roughly central positions in the front-rear direction of the left and right sides of the frame body 101a.

The first joining part 100 is configured so that the surface 102a of the packing member 102 can be joined to the joining surface of the collector flange part 52a (see FIG. 11).

The since the packing member 102 is securely fixed to the flange part 101b of the joining part main body 101 with four bolts 103 (see FIG. 9), the packing member 102 can be prevented from being peeled off from the flange part 101b and the durability of the packing member 102 can be improved.

Upper ends of a pair of left and right first tension springs 120 and 120 are attached to lower end parts of the pair of left and right turning arms 110 and 110, respectively, and lower ends of the pair of left and right first tension springs 120 and 120 are attached to a pair of left and right first tension spring attaching plates 121 and 121 which are fixed to both left and right side surfaces of the duct 26, respectively.

By means of this, each contraction force (elastic force) of the pair of left and right first tension springs 120 and 120 acts in such a manner that the pair of left and right second turning shafts 101c and 101c are allowed to be raised.

Further, an upper end of a second tension spring 130 is attached to a second tension spring upper end attaching plate 131 which is formed on a central part in a left-right width of the rear part of the joining part main body 101, and a lower end of the second tension spring 130 is attached to a second tension spring lower end attaching plate 132 which is fixed to a central part in a left-right width of the rear surface of the duct 26.

Incidentally, the second tension spring upper end attaching plate 131 is formed by bending a part of the flange part 101b of the joining part main body 101 downward.

By means of this, contraction force (elastic force) of the second tension spring 130 acts in such a manner that the first joining part 100 is allowed to be turned in a clockwise direction in a left side view about the pair of left and right second turning shafts 101c and 101c.

The pair of left and right first tension springs 120 and 120 are set so as to have larger contraction force (elastic force) than that of the second tension spring 130.

Additionally, a detection sensor 140 which detects whether the collector 14 is in the housing posture (housing position) or not is fixed to the left front sides of the upper end part of the duct 26. The detection sensor 140 is configured with a sensor main body 140a and a sensor arm 140b which is turnably attached on the left side surface of the sensor main body 140a. Since the first joining part 100 is located at a joining position described below when the collector 14 takes the housing posture (housing position), the above described detection rod 141 is moved downward, abuts on the sensor arm 140b, and as a result, sensor arm 140b is turned in a counterclockwise direction by the detection rod 141. By means of this, the sensor main body 140a operates, detect that the collector 14 takes the housing posture (housing position), so that an ON signal is output from the sensor main body 140a to a controller (not shown) of the riding-type mower 1.

By means of this configuration, when the collector 14 is allowed to be moved down for starting the mowing operation by action of the pair of left and right lifting cylinders 28 and 28, in a case where the controller does not receive the ON signal, the controller judges that the collector 14 is not in a proper housing posture, so that the controller allows a buzzer to generating alarm sound and does not allow the transmitting shaft 16 (see FIG. 2) which is connected with the blower 23 to rotate.

The configuration which includes the duct 26 and the first joining part 100 of the present embodiment is one example of a guide part of the present invention. The pair of left and right turning arms 110 and 110 is one example of a turning arm of the present invention. Additionally, the detection sensor 140 is one example of a detection part of the present invention and the detection rod 141 of the present embodiment is one example of a detection arm of the present invention.

Next, movement of the first joining part 100 at the time when the collector 14 is lifted and moved down will be described with reference to drawings.

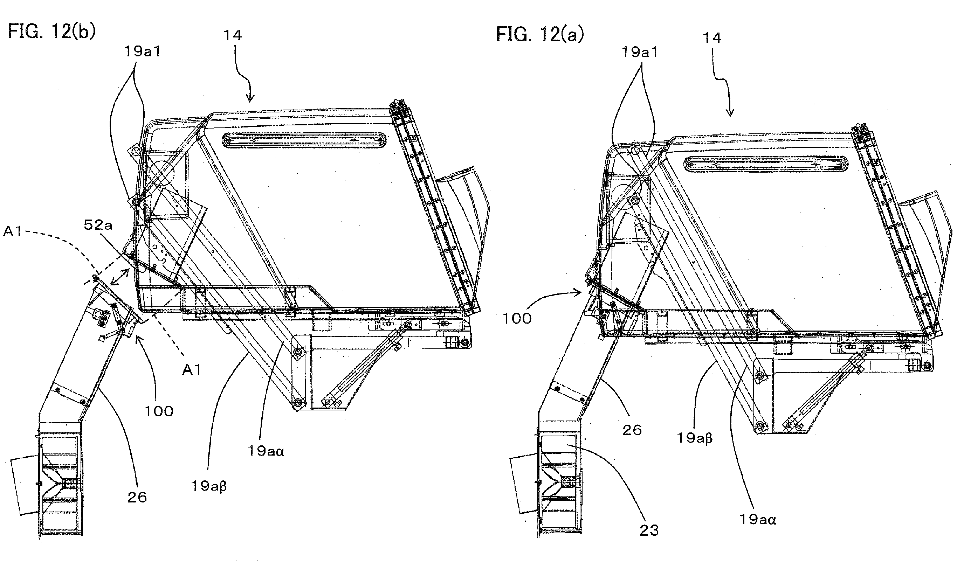

FIG. 12 (a) is a schematic side view which shows the joining position at which the first joining part 100 is located when the collector 14 is in the housing posture where the collector 14 is joined with the first joining part 100, and FIG. 12 (b) is a schematic side view which shows a separating position at which the first joining part 100 is located when the collector 14 is located away from the first joining part 100.

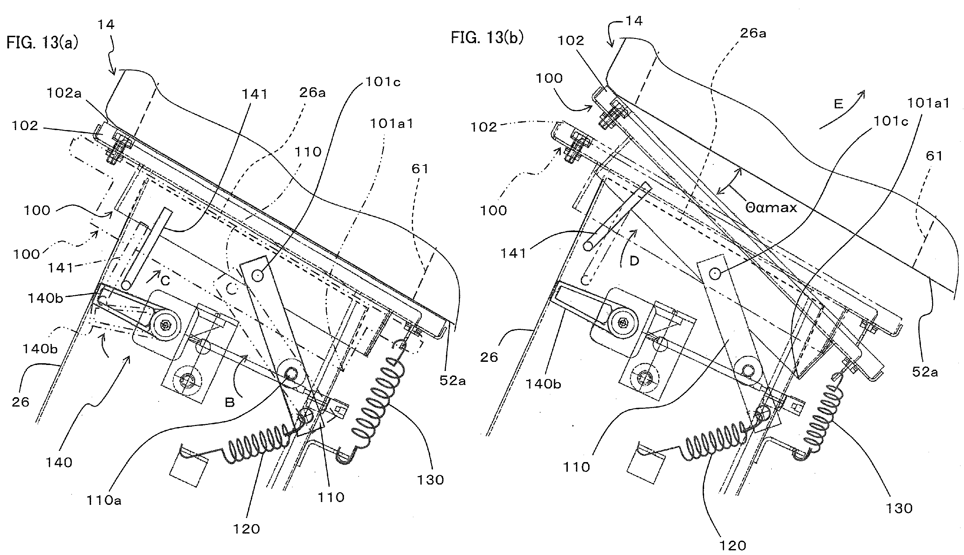

FIG. 13 (a) is a partial enlarged left side view which shows positional relation between the first joining part 100 and the collector flange part 52a when the collector 14 is slightly lifted from the housing position, and FIG. 13 (b) is a partial enlarged left side view which shows positional relation between the first joining part 100 and the collector flange part 52a when the collector 14 is further lifted from the housing position to be separated from the first joining part 100.

As described above, the collector 14 is configured in such a manner that the collector 14 is lifted and moved down by the pair of upper and lower collector lifting arms 19aα and 19aβ which is arranged on both left and right sides. Therefore, in a side view (see FIGs. 12 (a) and 12 (b)), an inclination angle of a joining surface, which can be joined with the packing member 102 of the first joining part 100, of the collector flange part 52a is kept in constant angle without change, when the collector 14 is lifted and moved down. Each locus A1 of the front end and rear end of the joining surface of the collector flange part 52a during lifting and lowering of the collector 14 becomes arcuate as shown in FIG. 12 (b).

First, movement of the first joining part 100 at the time when the collector 14 is lifted will be described with reference to FIGs. 13 (a) and 13 (b).

When the collector 14 is located at the housing position, the first joining part 100 is located at the joining position (see the position of the first joining part 100 shown with a two-dot chain line in FIG. 13 (a)). At this time, the collector flange part 52a is in surface-contact with the packing member 102 of the first joining part 100 between the front end and the rear end of the packing member 102 without a gap. Additionally, when the first joining part 100 is located at the joining position, a rear end edge part 101a1 of the inner wall surface of the frame body 101a of the first joining part 100 abuts on the outside wall surface of the duct 26.

When the first joining part 100 is located at the joining position, a surface 102a of the packing member 102 of the first joining part 100 is located over an upper end surface 26a of the duct 26 and is parallel with the upper end surface 26a of the duct 26.

Thereafter, when the collector 14 is slightly lifted from the housing position in a state where the inclination angle of a joining surface of the collector flange part 52a is kept in the above described constant angle, the pair of left and right turning arms 110 and 110 are turned in an arrow B direction (see FIG. 13 (a)) about the pair of left and right turning shafts 110a and 110a by the contraction force (elastic force) of the pair of left and right first tension springs 120 and 120, so that the pair of left and right second turning shafts 101c and 101c are lifted. That is, the first joining part 100 (see the first joining part 100 shown with a solid line in FIG. 13 (a)) is lifted diagonally backwardly and integrally with the collector flange part 52a in a state where the first joining part 100 is kept in contact with the collector flange part 52a (see an arrow C of FIG. 13 (a)).

In a case where the collector 14 is further lifted while holding the above described constant inclination angle, the turning movement of the pair of left and right turning arms 110 and 110 is stopped. However, the first joining part 100 is turned in an arrow D direction (see FIG. 13 (b)) about the pair of left and right second turning shafts 101c and 101c by contraction force (elastic force) of the second tension spring 130 as the collector flange part 52a is separated from the upper end surface 26a of the duct 26. As a result, in a state where the front end of the packing member 102 of the first joining part 100 and the front end of the collector flange part 52a are kept in contact with each other, the angle θα between the packing member 102 of the first joining part 100 and the collector flange part 52a becomes gradually larger from a state of 0 degree. And then, when the rear end edge part 101a1 of the inner wall surface of the frame body 101a of the first joining part 100 abuts on the outside wall surface of the duct 26 and the turning movement of the first joining part 100 in the arrow D direction is stopped, the angle θα becomes a maximum angle θαmax (see FIG. 13 (b)). After the turning movement of the first joining part 100 is stopped at a standby position of the first joining part 100 (see the first joining part 100 shown with a solid line in FIG. 13 (b)), the collector flange part 52a is completely separated from the packing member 102 and is lifted in an arrow E direction (see FIG. 13 (b)).

By means of this, in a case where the collector 14 is lifted from the housing position, since the first joining part 100 is lifted diagonally backwardly and integrally with the collector flange part 52a in a state where the first joining part 100 is kept in contact with the collector flange part 52a (see an arrow C of FIG. 13 (a)), the slippage of their contact surfaces between packing member 102 and the collector flange part 52a is suppressed and the wear of the packing member 102 is reduced.

By the way, in the present specification, the position of the first joining part 100, at the time when the angle θα between the packing member 102 of the first joining part 100 and the collector flange part 52a becomes the maximum angle θαmax (see FIG. 13 (b)), is referred to as a standby position of the first joining part 100, and the posture of the first joining part 100 at that time is referred to as a standby posture of the first joining part 100.

Additionally, in the present specification, the position of the first joining part 100, at the time when the packing member 102 of the first joining part 100 is surface-contact with the collector flange part 52a (see the first joining part 100 shown with a two-dot chain line in FIG. 13 (a)), is referred to as a joining position of the first joining part 100, and the posture of the first joining part 100 at that time is referred to as a joining posture of the first joining part 100.

In the present specification, the inclination angle (see the first joining part 100 shown with a solid line in FIG. 13 (b)) of the first joining part 100 in the standby posture (at the standby position) of the first joining part 100 is larger than the inclination angle (see the first joining part 100 shown with a two-dot chain line in FIG. 13 (a)) of the first joining part 100 in the joining posture (at the joining position) of the first joining part 100. By the way, the inclination angle of the first joining part 100 at the standby position of the first joining part 100 of the present embodiment is one example of a second inclination at a second position of the present invention. The inclination angle of the first joining part 100 at the joining position of the first joining part 100 of the present embodiment is one example of a first inclination at a first position of the present invention.

The joining position of the first joining part 100 of the present embodiment is one example of a first position of the present invention, and the standby position of the first joining part 100 of the present embodiment is one example of a second position of the present invention.

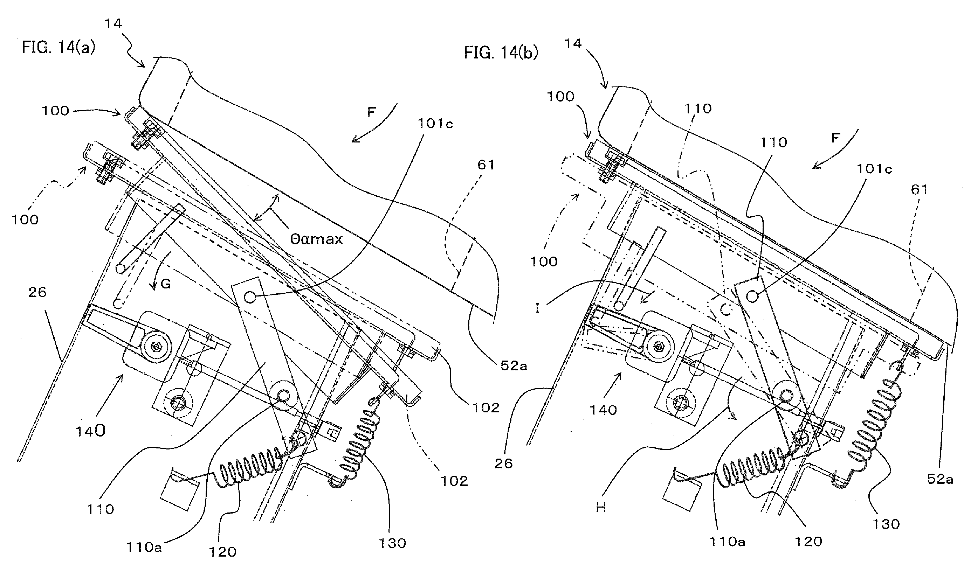

Next, movement of the first joining part 100 at the time when the collector 14 is lowered will be described with reference to FIGs. 14 (a) and 14 (b).

FIG. 14 (a) is a partial enlarged left side view which shows positional relation between the first joining part 100 and the collector flange part 52a when the collector 14 is lowered from the discharging position to come into contact with the front end part of the first joining part 100, and FIG. 14 (b) is a partial enlarged left side view which shows positional relation between the first joining part 100 and the collector flange part 52a when the collector 14 is further lowered to come into surface-contact with the packing member 102 of the first joining part 100.

The first joining part 100 shown with a solid line in FIG. 14 (a) is in the standby posture.

When the collector 14 is lowered in an arrow F direction (see FIG. 14 (a)) in a state where the inclination angle of the joining surface of the collector flange part 52a is kept in the above described constant angle, the front end of the joining surface of the collector flange part 52a comes into contact with the front end of the packing member 102 of the first joining part 100 (see FIG. 14 (a)). At this time, the angle θα between the packing member 102 of the first joining part 100 and the collector flange part 52a is the maximum angle θαmax as shown in FIG. 14 (a).

In the present embodiment, the riding-type mower 1 is configured in such a manner that the front end of the joining surface of the collector flange part 52a comes into contact with a desired position of the front end of the packing member 102 of the first joining part 100. Here, the desired positon means a position where when the collector 14 reaches the housing position, the joining state between the collector flange part 52a and the first joining part 100 can be realized within a previously set range, and the positional slippage of their contact surfaces exceeding the previously set range does not occur.

Thereafter, the collector 14 is further lowered in the arrow F direction (see FIG. 14(a)), so that the front end of the first joining part 100 is pressed by the front end of the joining surface of the collector flange part 52a, and the first joining part 100 is turned in an arrow G about the pair of left and right second turning shafts 101c and 101c.

As a result, the angle θα between the packing member 102 of the first joining part 100 and the collector flange part 52a becomes 0 degree (see FIG. 14 (b)).

When the collector 14 is furthermore lowered in the arrow F direction (see FIG. 14(b)) in a state where the inclination angle of the joining surface of the collector flange part 52a is kept in the above described constant angle, the collector flange part 52a presses the first joining part 100 in a state where the collector flange part 52a is in surface-contact with the packing member 102 of the first joining part 100 between the front end and the rear end of the packing member 102 without a gap.

By means of this, the pair of left and right turning arms 110 and 110 are tuned in an arrow H direction (see FIG. 14 (b)) about the pair of left and right first turning shafts 110a and 110a, and the pair of left and right second turning shafts 101c and 101c are lowered. That is, the first joining part 100 is lowered diagonally forwardly and integrally with the collector flange part 52a in a state where the first joining part 100 is kept in contact with the collector flange part 52a (see an arrow I of FIG. 14 (b)), and the movement of the first joining part 100 is stopped at the joining position (see the first joining part 100 shown with a two-dot chain line in FIG. 14(b)).

By means of this, in a case where the collector 14 is lowered from the discharging position, as described above, the first joining part 100 is located at the standby position, and the riding-type mower 1 is configured in such a manner that the front end of the joining surface of the collector flange part 52a comes into contact with the desired position of the front end of the packing member 102 of the first joining part 100. As a result, when the collector 14 reaches the housing position, the favorable joining state between the collector flange part 52a and the first joining part 100 is realized within a previously set range, and the positional slippage of their contact surfaces exceeding the previously set range does not occur.

Additionally, by means of this, the positional slippage of their contact surfaces between packing member 102 and the collector flange part 52a is suppressed and the wear of the packing member 102 is reduced.

Additionally, by means of the present embodiment, a part of the joining surface of the collector flange part 52a presses a part of the packing member 102 of the first joining part 100 (see FIG. 14 (a)), so that the first joining part 100 is moved downwardly, and thereafter, the collector 14 comes into surface-contact with the packing member 102 of the first joining part 100 at a position just in front of the joining position, and the first joining part 100 is lowered integrally with the collector flange part 52a to the joining position. On the other hand, in a case of the conventional riding-type mower which is not provided with components such as the above described first joining part 100 and the like, a large impact occurs when the whole joining surface of the collector flange part 52a abuts on the whole upper end of the duck 26.

Therefore, according to the above described configuration, the impact which is given on the packing member 102 of the first joining part 100 can be reduced, and the durability of the packing member 102 can be improved.

Additionally, by means of this, the impact which is given on the detection sensor 140 which is fixed to the left side surface of the duck 26 is also reduced, the durability of the detection sensor 140 can be improved, and reliability as a safety circuit can be improved.

Additionally, by means of the configuration of the present embodiment, since the pair of left and right first turning shafts 110a, 110a and the pair of left and right second turning shafts 101c, 101c are provided, the moving locus of the first joining part 100 can be brought closer to the moving locus of the collector flange part 52a, the positional slippage of their contact surfaces between packing member 102 and the collector flange part 52a can be suppressed, and the wear of the packing member 102 can be reduced.

Even when the front end of the joining surface of the collector flange part 52a comes into contact with the position shifted from the desired position of the front end of the packing member 102 of the first joining part 100, frictional force which is generated between the joining surface of the collector flange part 52a and the packing member 102 of the first joining part 100 becomes smaller as compared to that of the conventional configuration. Because a part of the joining surface of the collector flange part 52a presses a part of the packing member 102 of the first joining part 100 (see FIG. 14 (a)) to move the first joining part 100 downwardly. As a result, the positional slippage of their contact surfaces between packing member 102 and the collector flange part 52a can be suppressed, and the wear of the packing member 102 can be reduced.

By the way, in the above described embodiment, a case is described where the turning movement of the pair of left and right turning arms 110, 110 about the pair of left and right first turning shafts 110c, 110c and the turning movement of the first joining part 100 about the pair of left and right second turning shafts 101c, 101c are not simultaneously executed. However, the present invention is not limited to this. For instance, both turning movements may be simultaneously executed. In this case, the moving locus of the first joining part 100 can be brought much closer to the moving locus of the collector flange part 52a, the positional slippage of their contact surfaces between packing member 102 and the collector flange part 52a can be more suppressed, and the wear of the packing member 102 can be more reduced.

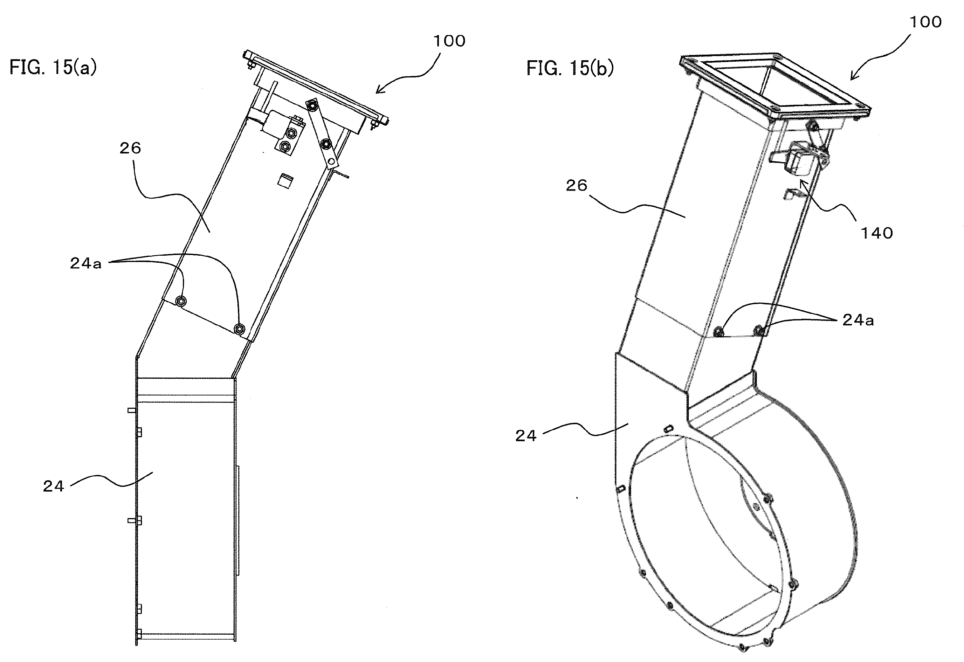

Additionally, in the above described embodiment, a case is described where the duct 26 and the blower case 24 are integrally configured (see FIG. 1). However, the present invention is not limited to this. For instance, as shown in FIGs. 15 (a) and 15 (b), the duct 26 may be fixed to blower case 24 by bolts 24a in such a manner that the duct 26 is separatable from the blower case 24. By means of this, the components such as the duct 26, the blower case 24, or the like can be exchanged easily and the assembly workability is improved. FIG. 15 (a) is a left side view of an assembly part in which the duct 26 is fixed to the blower case 24 by bolts. FIG. 15 (b) is a perspective view of the assembly part shown in FIG. 15 (a).

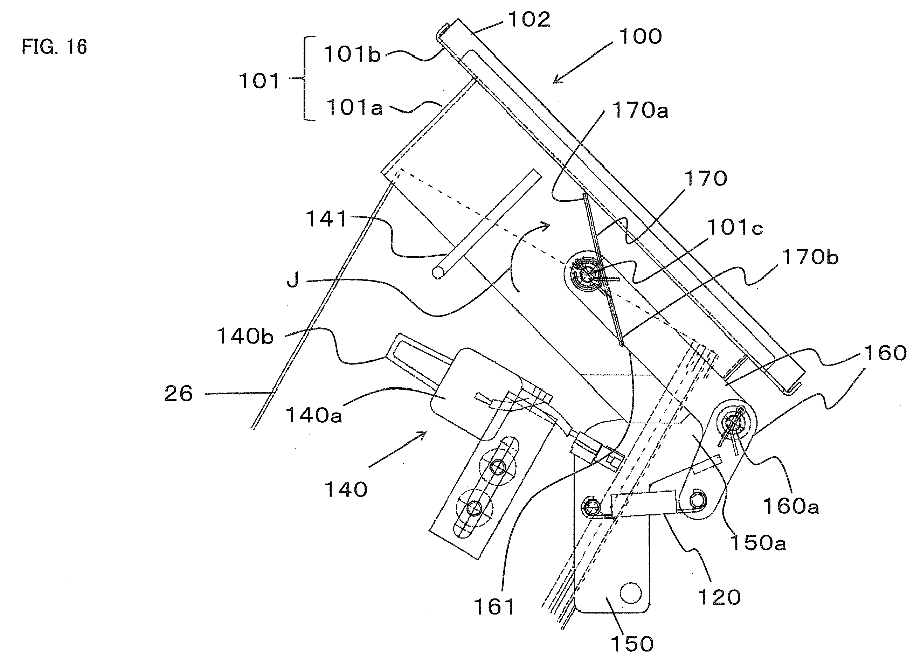

Additionally, in the above described embodiment, a case is described where the pair of left and right turning arms 110 and 110 (see FIG. 8) are turnably configured about the first turning shafts 110a and 110a which are fixed to the both left and right sides of the duct 26. However, the present invention is not limited to this. For instance, a pair of left and right second turning arms 160 and 160 (see FIG. 16) may be used by replacing the pair of left and right turning arms 110 and 110. Here, FIG. 16 is a schematic left side view for explaining configuration of a first joining part 100 as another example which is arranged on the upper end part of the duct 26 of the first embodiment, or the like. By the way, in FIG. 16, the components similar to those described above are denoted with the same reference numerals. In a case of the configuration shown in FIG. 16, a pair of left and right roughly L-shaped turning arm support plates 150 and 150 are fixed to both left and right rear end sides of the duct 26. Both ends of each of the pair of left and right turning arm support plates 150 and 150 protrude rearwardly from both left and right rear end sides of the duct 26. A pair of left and right second turning arm shafts 160a and 160a are disposed on upper ends 150a and 150a of the pair of left and right turning arm support plates 150 and 150, respectively. A pair of left and right roughly L-shaped second turning arms 160 and 160 are turnably supported by the pair of left and right second turning arm shafts 160a and 160a. The first joining part 100 is disposed on front ends of the pair of left and right second turning arms 160 and 160 so as to be turnable about the pair of left and right second turning shafts 101c and 101c. A pair of left and right torsion springs 170 and 170 are attached on the pair of left and right second turning shafts 101c and 101c. Upper ends 170a and 170a of the paired torsion springs 170 and 170 abut on the backside of the flange part 101b of the joining part 100, and lower ends 170b and 170b of the paired torsion springs 170 and 170 abut on the upper side lower edges 161 and 161 of the paired second turning arms 160 and 160, respectively. By means of this, each rotational torque which is generated around each shaft of the paired torsion springs 170 and 170 always acts on the first joining part 100 in the clockwise direction (see an arrow J) around each of the paired second turning shafts 101c and 101c in left side view. Additionally, like the above described configuration, each contraction force (elastic force) of the pair of left and right first tension springs 120 and 120 acts in such a manner that the pair of left and right second turning shafts 101c and 101c are allowed to be raised. The movement of the first joining part 100 at the time when the collector 14 is lifted and moved down is approximately the same as the above described movement of the first joining part 100 shown in FIG. 8, and it is possible to obtain a similar effect. By the way, the configuration which includes the duct 26, the first joining part 100, and the pair left and right turning arm support plates 150 and 150 of the configuration example shown in FIG. 16 is one example of a guide part of the present invention.

By the way, in the configuration of FIG. 16, the second tension spring 130 shown in FIG. 8 may be used by replacing the pair left and right torsion springs 170 and 170.

Additionally, in the configuration of FIG. 8, the pair left and right torsion springs 170 and 170 shown in FIG. 16 may be used by replacing the second tension spring 130.

### (Second Embodiment)

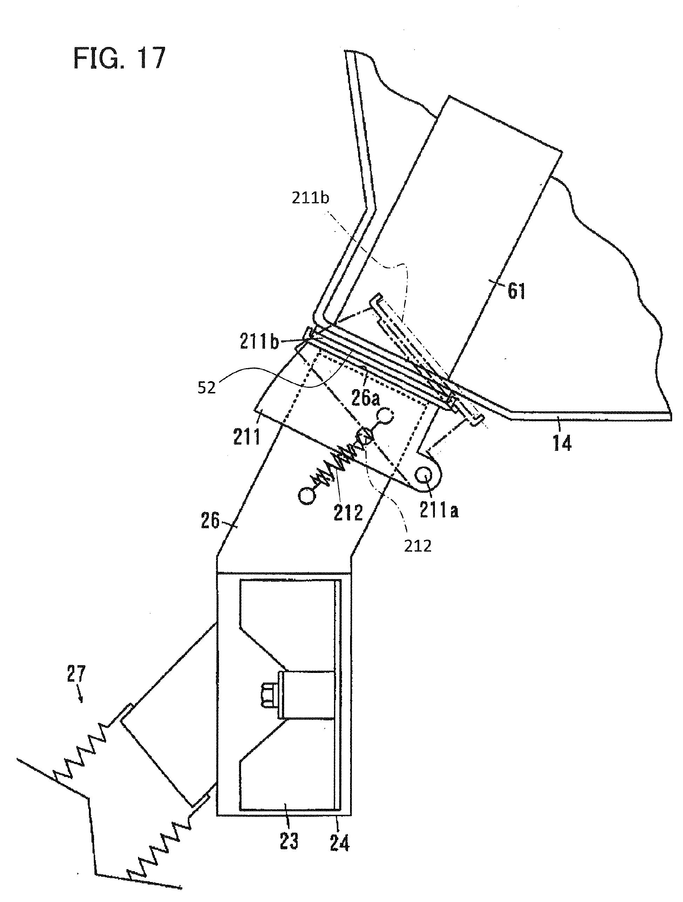

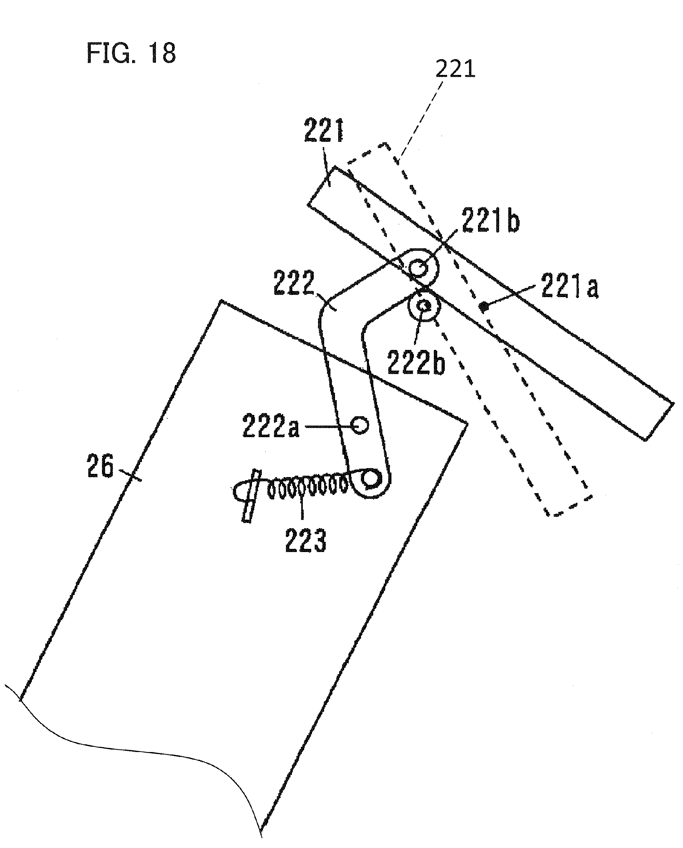

In this embodiment, other examples of the joining part of the mower of according to the present invention will be described with reference to FIGs. 17 and 18. By the way, in FIGs. 17 and 18, the components similar to those described in the first embodiment are denoted with the same reference numerals.

FIG. 17 is a schematic side view for explaining a main part of a joining portion between a duct 26 and a joining port 52 according to the second embodiment of the present invention.

As shown in FIG. 17, the upper end of the duct 26 of the present embodiment is provide with a roughly quadrilateral cylinder-shaped second joining part 211 as one example of a joining part of the present invention. Specifically, the second joining part 211 is turnably supported about a turning central shaft 211a which is disposed on the rear end of the duct 26. Therefore, the second joining part 211 is capable of being moved between a joining position where an upper end joining surface 211b of the second joining part 211 is parallelly adjacent to the upper end surface 26a of the duct 26 (see the second joining part 211 shown with a solid line in FIG. 17) and a standby position where the upper end joining surface 211b of the second joining part 211 protrudes upward from the upper end surface 26a of the duct 26 (see the second joining part 211 shown with a chain line in FIG. 17). The second joining part 211 is formed into the cylindrical shape which has an inner peripheral surface thereof having a size larger than the outer peripheral surface of the duct 26.

Additionally, a spring 212 is disposed between the duct 26 and the second joining part 211. The elastic force of the spring 212 acts in such a manner that the second joining part 211 is pushed to the standby position.

When the collector 14 is lifted and lowered, the locus of the joining port 52 of the collector 14, which occurs in a case where the joining port 52 is separated from the upper end surface of the duct 26 and is come into contact with the upper end surface of the duct 26, does not agree with the diagonally upwardly extending direction of the duct 26. Therefore, in a case of the conventional riding-type mower which is not provided with components such as the second joining part 211 and the like, the rubbing between the lower end surface of the joining port 52 and the upper end surface of the duct 26 is generated and the wear occurs. Therefore, a gap is generated with the lapse of time between the joining port 52 and the duct 26, air or the mowed lawn or grass feared to leak out. When the wear of the lower end surface of the joining port 52 and/or the upper end surface of the duct 26 occurs in a case of the conventional the riding-type mower, the replacement of the collector 14 and/or the duct 26 as a whole is required in a case of the replacement of components, and further the problem of increasing cost occurs.

On the other hand, in the present embodiment, when the collector 14 is lifted and lowered, the moving locus of the second joining part 211 can be brought closer to the moving locus of the joining port 52 as compared to the conventional riding-type mower which is not provided with components such as the second joining part 211 and the like. Therefore, the wear between the lower surface of the collector flange part 52a of the joining port 52 and the upper end joining surface 211b of the second joining part 211 can be reduced. In a case of the replacement of components due to the wear with the lapse of time, it is sufficient to replace only the second joining part 211 by using the second joining part 211 made from the material which wears out more easily than the joining port 52. It's possible to reduce the maintenance cost.

By the way, the configuration which includes the duct 26, and the second joining part 211 of the second embodiment shown in FIG. 17 is one example of a guide part of the present invention.

FIG. 18 is a schematic side view for explaining a main part of another example of a joining portion between the duct 26 and the joining port 52 according to the second embodiment of the present invention.

The example shown in FIG. 18 is provided with a quadrilateral frame-like third joining part 221 instead of the second joining part 211 shown in FIG. 17. The third joining part 221 is one example of a joining part of the present invention, and is supported by a third turning arm 222.

The third turning arm 222 is supported to the duct 26 so as to be turnable about a third turning shaft 222a. Additionally, the third joining part 221 is supported to the tip end of the third turning arm 222 so as to be turnable about a pivot 221b. Therefore, the third joining part 221 is movable supported between a joining position where the third joining part 221 is adjacent to the upper end surface of the duct 26 and a standby position where the third joining part 221 is separated upward from the upper end surface of the duct 26.

The third joining part 221 is set in such a manner that the position of the pivot 221b supported by the third turning arm 222 is located further forward than a position 221a of a center of gravity of the third joining part 221. Therefore, the third joining part 221 is set in such a manner that the rear end of the third joining part 221 inclines downward due to its own weight. The tip end of the third turning arm 222 is provide with a stopper 222b which sets the inclination angle by abutting on the third joining part 221. In the second embodiment, the inclination angle of the third joining part 221 which is set by the stopper 222b is set in such a manner that the front end of the collector flange part 52a of the joining port 52 of the collector 14 firstly comes into contact with the front end of the third joining part 221.

A spring 223 is disposed on the lower end of the third turning arm 222. The elastic force of the spring 223 acts in such a manner that the lower end of the third turning arm 222 is pulled forward, that is, the third joining part 221 is moved to the standby position.

By means of the example shown in FIG. 18, like the configuration shown in FIG. 17, when the collector 14 is lifted and lowered, the moving locus of the third joining part 221 can be brought closer to the moving locus of the joining port 52. Therefore, the wear between the lower surface of the collector flange part 52a of the joining port 52 and the upper end joining surface of the third joining part 221 can be reduced. In particular, since the third joining part 221 is turnably supported to the third turning arm 222, even if the collector 14 starts lifting, the third joining part 221 is lifted integrally with the collector flange part 52a in a state where the third joining part 221 is kept in contact with the collector flange part 52a of the joining port 52. As a result, the collector flange part 52a can be separated from the third joining part 221 easily without rubbing in a surface direction between the third joining part 221 and the collector flange part 52a of the joining port 52.

Additionally, when the collector 14 is lowered, the third joining part 221 is inclined by its own weight, and the inclination angle of the third joining part 221 is the angle of easily receiving the collector flange part 52a of the joining port 52. Therefore, when the collector 14 is also lowered, after the collector flange part 52a of the joining part 52 comes into contact with the third joining part 221 without rubbing in the surface direction between the third joining part 221 and the collector flange part 52a of the joining port 52, the third joining part 221 is easily moved integrally with the collector flange part 52a of the joining port 52 in a state where the third joining part 221 is kept in contact with the collector flange part 52a to the joining position.

By the way, the configuration which includes the duct 26 and the third joining part 221 of the second embodiment is one example of a guide part of the present invention. The third turning arm 222 is one example of a turning arm of the present invention.

By the way, in the above described embodiment (see FIG. 8), a case is described where the first joining part 100 is configured so as to be capable of swinging up and down about the pair of left and right first turning shafts 110a and 110a and so as to be capable of turning about the pair of left and right second turning shafts 101c and 101c. However, the present invention is not limited to this. For instance, the first joining part 100 may be configured so as to be capable of swinging up and down about the pair of left and right first turning shafts 110a and 110a and so as not to be capable of turning about shafts, or the first joining part 100 may be configured so as to be capable of turning about the pair of left and right second turning shafts 101c and 101c and so as not to be capable of swinging up and down about shafts.

Additionally, in the above described embodiment (see FIG. 16), a case is described where the first joining part 100 is configured so as to be capable of swinging up and down about the pair of left and right second turning arm shafts 160a and 160a and so as to be capable of turning about the pair of left and right second turning shafts 101c and 101c. However, the present invention is not limited to this. For instance, the first joining part 100 may be configured so as to be capable of swinging up and down about the pair of left and right second turning arm shafts 160a and 160a and so as not to be capable of turning about shafts, or the first joining part 100 may be configured so as to be capable of turning about the pair of left and right second turning shafts 101c and 101c and so as not to be capable of swinging up and down about shafts.

Additionally, in the above described embodiment (see FIG. 8), the case is described where the paired turning arms 110 and 110 are arranged on both left and right sides of the duct 26. However, the present invention is not limited to this. For instance, the turning arm 110 may be arranged on the left or right side of the duct 26.

Additionally, in the above described embodiment (see FIG. 16), the case is described where the paired turning arm support plates 150 and 150 and the paired second turning arms 160 and 160 are arranged on both left and right sides of the duct 26, respectively. However, the present invention is not limited to this. For instance, the turning arm support plate 150 and the second turning arm 160 may be arranged on the left or right side of the duct 26.

A mower according to the present invention is capable of realizing the favorable joining state between the collector and the guide part which guides the mowed lawn or grass to the collector, and is useful for a mower for carrying out the mowing operation of mowing lawn or grass.

## Claims

1. A mower comprising:
a vehicle body (2);
a mower unit (6) which is connected to the vehicle body (2);
a housing part (14) which houses mowed lawn or grass which is mowed by the mower unit (6);
a guide part (26, 100, 150, 211, 221) which guides the mowed lawn or grass from the mower unit (6) to the housing part (14); and
a lifting apparatus (19, 28, 29) which switches the housing part (14) between a discharging position to discharge the mowed lawn or grass from the housing part (14) and a housing position to house the mowed lawn or grass into the housing part (14),
**characterized in that**
the guide part (26, 100, 150, 211, 221) has a joining part (100, 211, 221) which can be joined to the housing part (14), and
the joining part (100, 211, 221) is located at a first position at which the joining part is joined to the housing part (14) when the housing part (14) is located at the housing position, and is located at a second position at which the joining part is located away from the housing part (14) when the housing part (14) is located at the discharging position.

2. The mower according to claim 1, wherein
the joining part (100, 211, 221) has a first inclination at the first position and a second inclination at the second position, the second inclination being larger than the first inclination.

3. The mower according to claim 1 or 2, comprising
a detection part (140) which detects whether the housing part (14) is located at the housing position or not, and is disposed on a main body (26) of the guide part, and
a detection arm (141) which is arranged on the joining part (100),
wherein the detection part (140) detects that the housing part (14) is located at the housing position by abutting of the detection arm (141) on the detection part (140).

4. The mower according to any one of claims 1 to 3, wherein the joining part (100, 211, 221) is turnably mounted on the main body (26) of the guide part.

5. The mower according to claim 4, comprising
a turning arm (110, 222) which is turnably mounted on the main body (26) of the guide part, wherein
the joining part (100, 221) is turnably attached to an end part of the turning arm (110, 222).

6. The mower according to claim 5, wherein
the joining part (100, 211, 221) is joined to the main body (26) of the guide part at the first position, and is located away from the main body (26) of the guide part at the second position.
